Europäisches Patentamt

European Patent Office

Office européen des brevets

(11) Numéro de publication: **0 037 449**

**A1**

(12) # DEMANDE DE BREVET EUROPEEN

(21) Numéro de dépôt: **80400454.7**

(51) Int. Cl.³: **G 05 D 1/00**

(22) Date de dépôt: **04.04.80**

(43) Date de publication de la demande:
**14.10.81 Bulletin 81/41**

(84) Etats contractants désignés:
**DE GB IT**

(71) Demandeur: Association dite: ASSOCIATION POUR LE DEVELOPPEMENT DE L'ENSEIGNEMENT ET DE LA RECHERCHE EN SYSTEMATIQUE APPLIQUEE (A.D.E.R.S.A.) 53, Avenue de l'Europe
F-78140 Velizy-Villacoublay(FR)

(72) Inventeur: Richalet, Jacques
3 Allée des Nourrets
F-78430 Louveciennes(FR)

(72) Inventeur: Papon, Jacques
41 Rue Frémicourt
F-75015 Paris(FR)

(74) Mandataire: Moncheny, Michel et al,
c/o Cabinet Lavoix 2 Place d'Estienne d'Orves
F-75441 Paris Cedex 09(FR)

(54) **Système d'aide au pilotage notamment pour aéronefs.**

(57) Système d'élaboration de commandes pour aéronefs ou véhicules terrestres et marins comportant des moyens d'acquisition de données relatives aux paramètres du véhicule pendant son parcours et dont il y a lieu de tenir compte en vue d'assurer la commande de celui-ci et des moyens de traitement desdites données, connectés auxdits moyens d'acquisition, caractérisé en ce qu'il comporte en outre des moyens (2) pour engendrer des signaux correspondant aux réactions qu'aurait un pilote humain idéal dans les conditions où se trouve le véhicule à commander, des moyens (3) pour synthétiser les données relatives aux paramètres du véhicule, et les données relatives aux réactions du pilote idéal pour constituer des instructions à transmettre au pilote humain (4) du véhicule et des moyens de présentation desdites instructions au pilote, sous forme exploitable directement par celui-ci.

FIG.1

1

## Système d'aide au pilotage notamment pour aéronefs.

La présente invention est relative à un système d'aide au pilotage des aéronefs tels qu'avions, hélicoptères, engins ou véhicules terrestres et marins, par présentation d'informations graphiques sur un synthétiseur suggérant directement un déplacement des organes de commande (manche, gouvernail, direction, etc.).

D'une part, les véhicules deviennent de plus en plus difficiles à piloter parce que plus performants; d'autre part, les exigences sur la qualité de la conduite augmentent de telle sorte qu'une assistance matérielle au pilotage apparaît de plus en plus nécessaire.

Il s'agit alors de suggérer au pilote l'action de commande à entreprendre à tout instant pour pouvoir satisfaire le critère de qualité de conduite qui lui a été fixé, par exemple, suggérer de déplacer le manche d'un avion vers une position telle que l'appareil revienne dans une attitude normale après qu'il en ait été écarté.

Toute la difficulté réside alors dans la détermination de cette suggestion. En effet, il convient de satisfaire deux types d'exigences:

- élaborer des ordres de braquage des gouvernes qui soient opportuns et efficaces, ce que fait par exemple un pilote automatique ordinaire à partir des informations d'attitude données par l'instrumentation habituelle;

- être facilement interprétable par l'homme et présenter une compréhension ergonomique telle que l'exécution de l'ordre soit aisée.

Le non-respect de cette dernière condition, souvent présente dans les systèmes de présentation habituels, peut même amener à augmenter la charge de travail du pilote plutôt que la diminuer.

L'invention vise à créer un système d'élaboration de commandesqui permette de satisfaire aux exigences précitées.

Elle a donc pour objet un procédé d'élaboration de commandes pour aéronefs ou véhicules terrestres ou marins, consistant à acquérir des données relatives aux paramètres du véhicule pendant son parcours et dont il y a lieu de tenir compte en vue d'assurer la commande de celui-ci et à traiter ces données en vue d'en déduire des instructions de commande, caractérisé en ce qu'il consiste en outre à engendrer des signaux correspondant aux réactions qu'aurait un pilote humain idéal dans les conditions où se trouve le véhicule à commander, à synthétiser les données relatives aux paramètres du véhicule et les données relatives aux réactions du pilote idéal pour constituer des instructions à transmettre au pilote humain du véhicule et à présenter ces instructions sous une forme directement et aisément exploitable par le pilote humain.

Elle a également pour objet un système d'élaboration de commandes pour aéronefs ou véhicules terrestres et marins comportant des moyens d'acquisition de données relatives aux paramètres du véhicule pendant son parcours et dont il y a lieu de tenir compte en vue d'assurer la commande de celui-ci et des moyens de traitement desdites données, connectés auxdits moyens d'acquisition, caractérisé en ce qu'il comporte en outre des moyens pour engendrer des signaux correspondant aux réactions qu'aurait un pilote humain idéal dans les conditions où se trouve le véhicule à commander, des moyens pour synthétiser les données relatives aux paramètres du véhicule, et les données relatives aux réactions du pilote idéal pour constituer des instructions à transmettre au pilote humain du véhicule et des moyens de présentation desdites instructions

3

au pilote, sous forme exploitable directement par celui-ci.

Le système d'élaboration de commande suivant l'invention permet de simuler ce qu'un pilote humain parfait ferait idéalement à tout instant. Le résultat élaboré de l'action de ce pilote synthétique mais anthropomorphe est présenté par un dispositif vidéoscopique ou mécanique au pilote réel qui a liberté de l'appliquer effectivement ou non.

D'autres caractéristiques de l'invention apparaîtront au cours de la description qui va suivre.

Au dessin annexé, donné uniquement à titre d'exemple :

- la Fig.1 est un schéma synoptique general du système suivant l'invention;

- la Fig.2 est un schéma partiel, plus détaillé du schéma de la Fig.1;

- la Fig.3 est un schéma montrant des exemples de domaines d'action du système suivant l'invention;

- la Fig.4 est un diagramme montrant un exemple de commande anthropomorphe délivrée par le système;

- la Fig.5 représente l'écran du dispositif de présentation sur lequel est porté un point de position vraie d'un organe de commande du véhicule par rapport à une zone de consigne.

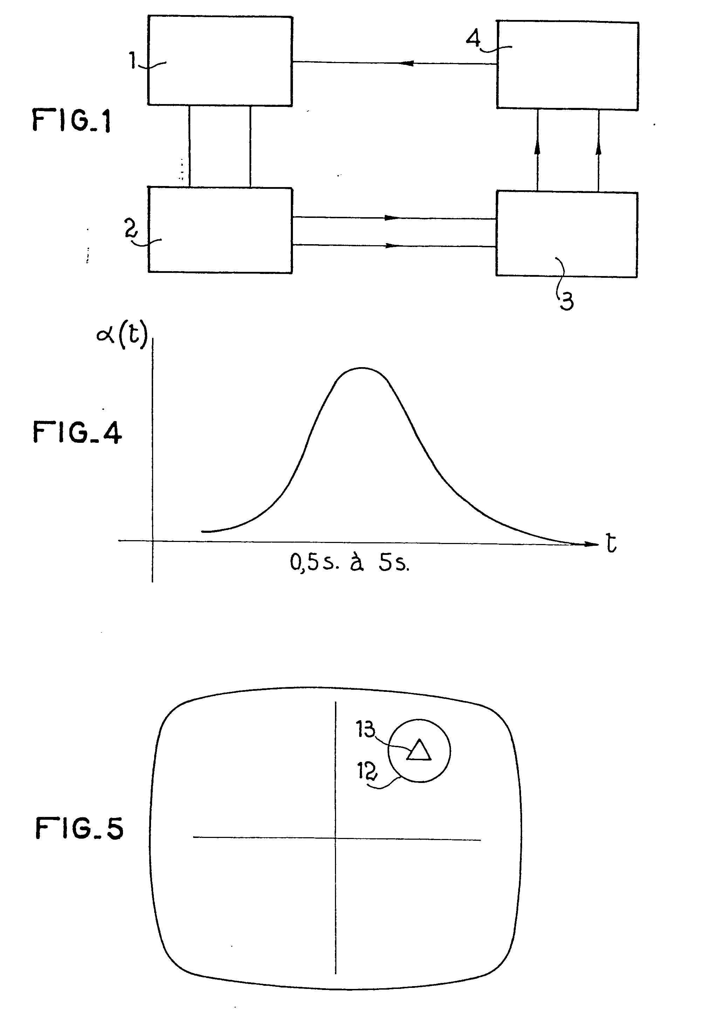

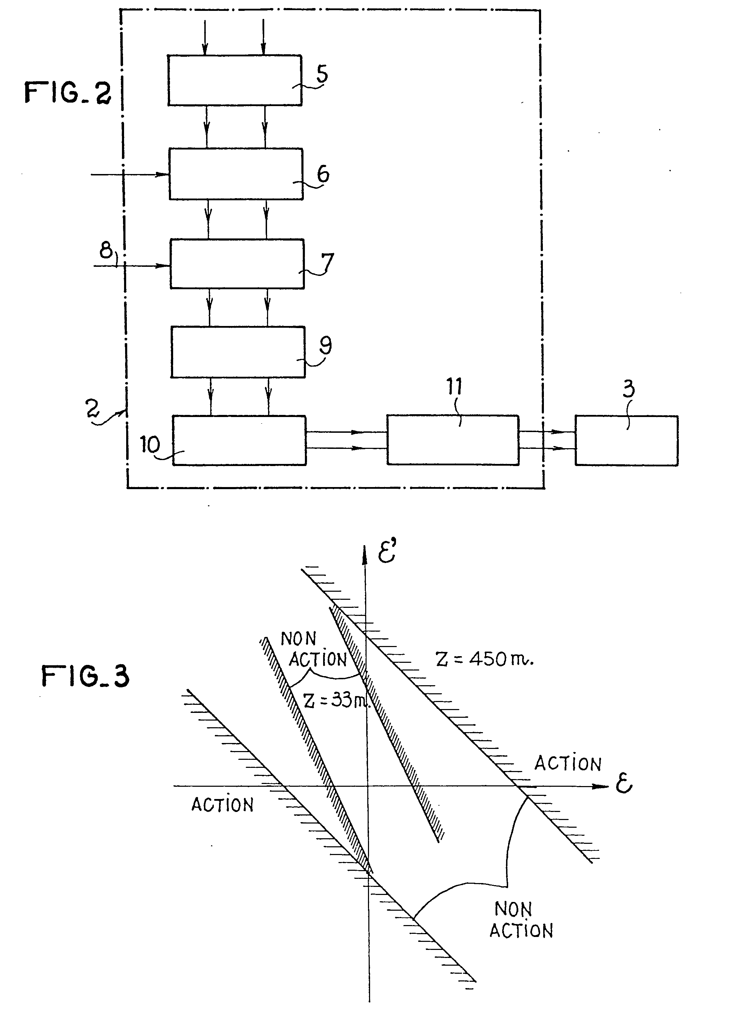

Le système représenté à la Fig.1 comporte un véhicule 1 que l'on considèrera à titre d'exemple comme un avion, équipé de capteurs appropriés des divers paramètres nécessaires à déterminer les conditions instantanées de vol de l'avion, ces capteurs étant connectés à un ensemble 2 de traîtement des données de l'avion issues de l'ensemble 1.

La sortie de l'ensemble de traîtement 2 est connectée à l'entrée d'un synthétiseur 3 destiné à élaborer des informations qui seront présentées au pilote humain 4 et à présenter ces informations sous une forme pouvant être assimilée aisément et sans fatigue excessive par le pilote humain.

4

Ce dernier compare ces informations à sa propre appréciation de la situation et manoeuvre les commandes de l'aéronef soit en se conformant strictement aux informations du synthétiseur, soit en s'en inspirant.

De cette façon, le système suivant l'invention constitue une aide constante pour le pilote qui dispose en permanence au sujet des manoeuvres à effectuer des informations qu'il peut considérer comme des instructions et qu'il peut exécuter sans peine car elles lui sont présentées sous une forme familière à sa tournure d'esprit et à son mode de réflexion..

L'ensemble de traîtement des données provenant des capteurs équipant l'avion 1, va maintenant être décrit en référence à la Fig.2.

Cet ensemble comporte tout d'abord un circuit 5 d'acquisition des données des capteurs équipant le véhicule 1, un circuit 6 à résistance et capacité de filtrage de ces données et un circuit 7 de comparaison avec des données de consigne qu'il reçoit sur une borne 8 et d'estimation.

Les sorties du circuit 7 sont connectées aux entrées d'un circuit 9 de test du domaine d'action, qui, compte-tenu de l'estimation reçue du circuit 7, transmet des informations à un circuit 10 de calcul des commandes dont les sorties sont connectées aux entrées d'un répartiteur d'ordres 11.

Les sorties de ce dernier circuit sont connectées aux entrées du synthétiseur 3 déjà représenté à la Fig.1.

Le circuit 10 de la Fig.2 est commandé par un programme correspondant à un modèle de pilote anthropomorphe de façon à élaborer des signaux de sortie traduisant les réactions à une situation donnée par les informations concernant le véhicule 1 délivrées par les capteurs qui l'équipent et par les consignes sur l'objectif à atteindre reçues des instruments actionnés par le pilote humain.

Le modèle mathématique du pilote est établi à partir de l'acquisition de connaissances expérimentales

5

sur le comportement d'un opérateur humain entraîné quand il est chargé de piloter son véhicule, c'est-à-dire comment en présence d'une information constituée par exemple par le cap, l'assiette, etc.. et d'une consigne c telle que l'instruction de tenir un faisceau radioélectrique, il élabore des interventions u par exemple sur les gouvernes de profondeur, de gauchissement du véhicule. Ce modèle mathématique permet donc à chaque instant de mimer ce que ferait dans des circonstances analogues, un pilote humain idéal.

Ce modèle a été établi sur une base statistique d'une population de pilotes entraînés.

Les modèles mathématiques de pilote ont fait l'objet d'une communication de J. RICHALET et A. RAULT au colloque BIOMECA II relatif à la Biomécanique du pilotage et l'interface homme-machine qui s'est tenu les 25, 26 et 27 Novembre 1976 à TOULOUSE.

Le modèle de pilote est utilisé dans le circuit 10, en temps réel, lors du fonctionnement normal du synthétiseur. Il procède alors à une simulation, analogique ou numérique, du pilote idéal suivant les différentes étapes exposées ci-après :

a) détermination d'un domaine d'action tel que si l'appareil se trouve dans ce domaine, une commande nouvelle soit calculée et proposée au pilote;

b) calcul de cette commande tel qu'un critère de qualité du comportement de l'aéronef soit minimisé.

Le fonctionnement du système qui vient d'être décrit va être illustré à titre d'exemple par le cas d'un avion en approche sur un faisceau radioélectrique ILS dont il reçoit les signaux $\xi$ LOCALISEUR, $\xi$ D'ANGLE DE DESCENTE.

Le circuit 2 de la Fig.1, représenté plus en détail à la Fig.2 assure les fonctions suivantes :

Acquisition des signaux.

6

Les informations nécessaires au pilotage sont acquises à partir de l'instrumentation habituelle équipant l'appareil, qui donne entre autres :

- le cap $\Psi$
- l'assiette latérale $\varphi$ , longitudinale $\Theta$
- le dérapage j
- l'altitude z
- les braquages de gouverne longitudinale $\alpha$ et latérale $\beta$ , de direction S
- les signaux radio ILS $\varepsilon_L$, $\varepsilon_G$

Ces signaux sont filtrés à l'aide du circuit RC analogique 6 et échantillonnés à une période T comprise entre 50 ms et 100 ms.

Les dérivées des signaux radio sont estimées à partir des signaux échantillonés $\varepsilon_{(n)}$ par la relation:

$$\varepsilon'_{(n)} = \frac{1}{T} \left\{ \varepsilon_{(n)} - \varepsilon_{(n-1)} \right\}$$

Les signaux de sortie du circuit 7 qui portent l'information relative à la situation radio-électrique actuelle de l'appareil sont comparés à un domaine d'action défini, dans le circuit 9.

Pour que l'appareil se trouve dans le domaine d'action, il faut que l'une des relations suivantes soit satisfaite.

$$\varepsilon'_{(n)} - \lambda \varepsilon_{(n)} > h$$

$$\varepsilon'_{(n)} - \lambda \varepsilon_{(n)} < -h$$

dans lesquelles les paramètres $\lambda$ et h dépendent :

a) de l'altitude, de telle sorte que la décision d'action soit plus fréquente à 33 mètres qu'à 450 mètres.

7

Sur le graphique de la Fig.3 on a représenté des exemples de domaines d'action.

$$Z = 450 \text{ mètres} \quad h= 400 \text{ mrd/s} = 150 \text{ s}^{-1}$$
$$Z = 15 \text{ mètres} \quad h= 300 \text{ mrd/s} = 300 \text{ s}^{-1}$$

b) du pilote anthropomorphe. Plus h est petit, plus la fréquence des suggestions de pilotage est grande.

Le paramètre h est en fait un paramètre de réglage du synthétiseur.

Ensuite, le circuit 10 assure le calcul des commandes. Ce calcul repose sur deux principes.

On dispose d'un modèle mathématique approché de l'appareil. On sait donc calculer le comportement futur prévisible de l'avion sous l'action d'une commande; par exemple dans le cas d'un écart $\varepsilon_{LOC}$ on sait que :

$$\varepsilon_L (p)= \frac{K}{p2} \, \alpha (p) , \text{où } \frac{K}{p2}$$

représente une fonction de transfert doublement intégratrice et $\varepsilon (p)$ et $\alpha(p)$, les transformées de Laplace de l'écart et de la commande.

Il est alors aisé de simuler sur un organe de calcul numérique ou analogique qui fait partie du circuit 10, ce transfert en temps réel ou d'en déduire les effets futurs calculés, d'une commande $\tilde{\alpha}$ car on connaît à chaque instant les conditions initiales $\varepsilon_o$, $\varepsilon'_o$.

La commande peut être calculée de plusieurs façons que l'on peut schématiser en deux classes.

a) Imposer à des instants à venir que l'appareil présente des écarts $\varepsilon$ et $\varepsilon'$ fixés par une consigne.

b) Minimiser à un instant à venir un critère intégral de type énergétique.

$$C = \sum_{n+N_1}^{n+N_2} k_1 \, \varepsilon^2_{(n)} + k_1 \, \varepsilon'^2_{(n)}$$

8

Pour être anthropomorphe, la commande doit avoir une allure en cloche donnée par la Fig.4 et être de durée limitée.

La décision de commande étant prise par le circuit 9 et le calcul de la commande étant effectué par le circuit 10, un ordre est envoyé à l'organe de visualisation du synthétiseur 3 par l'intermédiaire du répartiteur d'ordres 11, constitué par un conditionneur de signaux dont la fonction est de répartir les ordres suivant une disposition ergonomique acceptable.

Par une symbolique appropriée, liée aux moyens d'affichage utilisés, une suggestion est faite au pilote.

Par exemple, si le moyen d'affichage est un oscilloscope dont l'écran est représenté à la Fig.5, la position suggérée du manche est indiquée par le cercle 12 alors que la position réelle de celui-ci est donnée par le triangle 13.

Le pilote a pour consigne de faire coincider les deux symboles en agissant sur le manche.

Il agit suivant cette suggestion. Si son action est voisine de celle suggérée par le moniteur que constitue le système de l'invention, le cercle 12 revient rapidement au centre de l'écran de la Fig.5.

Si le pilote n'obéit pas à la suggestion du moniteur, le cercle 12 va s'écarter davantage du centre de l'écran.

Une vérification supplémentaire par l'intermédiaire de l'écart de cap est alors possible et peut être représenté sur l'écran du dispositif d'affichage par une symbolique appropriée.

Dans le mode de réalisation qui vient d'être décrit, le système est utilisé comme moniteur de navigation qui suggère au pilote la manoeuvre à effectuer, compte-tenu des conditions de vol de l'appareil et des consignes

9

qui doivent être exécutées, le pilote ayant toute latitude de suivre ou de ne pas suivre ces suggestions.

Cependant, ce système peut être également couplé directement sur les commandes de l'appareil et joue alors un rôle voisin d'un pilote automatique, mais dont les signaux de commande qui continuent à apparaître en permanence sur l'écran du dispositif d'affichage permettent au pilote humain d'apprécier à chaque instant et sans effort la situation de son appareil.

0037449

## 10

### REVENDICATIONS

1. Procédé d'élaboration de commandes pour aéronefs ou véhicules terrestres ou marins, consistant à acquérir des informations relatives aux paramètres du véhicule pendant son parcours et dont il y a lieu de tenir compte en vue d'assurer la commande de celui-ci et à traiter ces données en vue d'en déduire des instructions de commande, caractérisé en ce qu'il consiste en outre à engendrer des signaux correspondant aux réactions qu'aurait un pilote humain idéal dans les conditions où se trouve le véhicule à commander, à synthétiser les données relatives aux paramètres du véhicule et les données relative aux réactions du pilote idéal pour constituer des instructions à transmettre au pilote humain du véhicule et à présenter ces instructions sous une forme directement et aisément exploitable par le pilote humain.

2. Procédé suivant la revendication 1, caractérisé en ce que les signaux correspondant aux réactions d'un pilote humain idéal sont élaborés à partir d'un modèle mathématique de pilote établi d'après les réactions d'un certain nombre de pilotes entraînés.

3. Système d'élaboration de commandes pour aéronefs ou véhicules terrestres et marins comportant des moyens d'acquisition de données relatives aux paramètres du véhicule pendant son parcours et dont il y a lieu de tenir compte en vue d'assurer la commande de celui-ci et des moyens de traitement desdites données, connectés auxdits moyens d'acquisition, caractérisé en ce qu'il comporte en outre des moyens (2) pour engendrer des signaux correspondant aux réactions qu'aurait un pilote humain idéal dans les conditions où se trouve le véhicule à commander, des moyens (3) pour synthétiser les données relatives aux paramètres du véhicule, et les données relatives aux réactions du pilote idéal pour constituer des instructions à transmettre au pilote humain (4) du véhicule et des moyens de présentation desdites instructions au pilote, sous for-

11

me exploitable directement par celui-ci.

4. Système suivant la revendication 3, caractérisé en ce que les moyens (2) pour engendrer des signaux correspondant aux réactions qu'aurait un pilote humain idéal comprennent un circuit (5) d'acquisition des données relatives aux paramètres du véhicule, un circuit (6) de filtrage des signaux de sortie du circuit d'acquisition, un circuit (7) de comparaison des données ainsi filtrées avec des données de consigne, un circuit (9) de test du domaine d'action à considérer pour élaborer les signaux de commande appropriés, un circuit (10) de calcul de commandes, connecté au synthétiseur (3) par l'intermédiaire d'un circuit (11) répartiteur d'ordres.

5. Système suivant la revendication 4, caractérisé en ce que le circuit de calcul (10) est commandé par un programme correspondant à un modèle de pilote anthropomorphe de façon à élaborer des signaux de sortie traduisant les réactions d'un pilote idéal à une situation donnée par les informations concernant le véhicule (1) et par les consignes sur l'objectif à atteindre.

FIG.1

FIG.4

$\alpha(t)$

0,5s. à 5s.

FIG.5

FIG.2

FIG.3

Office européen
des brevets

**RAPPORT DE RECHERCHE EUROPEENNE**

| | **DOCUMENTS CONSIDERES COMME PERTINENTS** | | **CLASSEMENT DE LA DEMANDE (Int. Cl. ³)** |
|---|---|---|---|
| Catégorie | Citation du document avec indication, en cas de besoin, des parties pertinentes | Revendication concernée | |
| A | JOURNAL A, vol. 19, no. 3, juillet 1978 Anvers BE H. STASSEN et al.: "Human manual and supervisory control models" pages 160-178<br><br>* Page 162, colonne de gauche, ligne 1 - page 163, colonne de gauche, ligne 17; page 166, colonne de droite, ligne 37 - page 167, colonne de droite, ligne 9; figures 1,8c *<br><br>-- | 1 | G 05 D 1/00 |
| A | NASA CONTRACTOR REPORT NASA CR- 1952, novembre 1971 Washington US D.L. KLEINMAN et al.: "Analytic evaluation of display requirements for approach to landing"<br><br>* Page 15, lignes 1-10; page 59, ligne 1 - page 61, ligne 9, figure 1 *<br><br>---- | 1 | **DOMAINES TECHNIQUES RECHERCHES (Int. Cl. ³)**<br><br>G 05 D 1/00<br> 1/10<br>G 05 B 13/02 |

**DOMAINES TECHNIQUES RECHERCHES (Int. Cl. ³)**

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 04-12-1980 | HELOT |

OEB Form 1503.1  06.78